# EUROPEAN PATENT APPLICATION

(11) **EP 3 388 798 A1**
(43) Date of publication of application: **17.10.2018**
(21) Application number: 18164920.3
(22) Date of filing: 29.03.2018
(51) Int. Cl.: G01H 1/00, G01M 13/04, F16M 11/04, G01P 1/02

(54) **EXACT CONSTRAINT MAGNETIC MOUNT FOR VIBRATION SENSING MODULE**

(30) Priority: 10.04.2017 US 201715483302; 11.12.2017 US 201715837443
(71) Applicant: ITT Manufacturing Enterprises LLC, Wilmington, DE 19801 (US)
(72) Inventor: DECOOK, Bradley, Victor, NY 14564 (US)
(74) Representative: Patentanwälte Magenbauer & Kollegen Partnerschaft mbB

(57) **Abstract**

A magnetic mounting device is provided for mounting a vibrational sensor or other device to a machine or structure, and particularly a vibrating machine or structure. The magnetic mounting device includes a mount surface and a mounting base with an encapsulated magnet and including a three mounting projections projecting therefrom, which provide an exact constraint mounting of the magnetic mounting device on the vibrating machine or structure. The three-point mounting arrangement allows the magnetic mounting device to be rigidly mounted to flat, curved and irregular surfaces without requiring a specific orientation of the magnetic mounting device on the surface.

## Description

### BACKGROUND OF THE INVENTION

### 1. Field of the Invention

This application relates to a mounting device for a sensing module device for use in combination with a vibrating machine or structure that is configured to securely mount the sensing module to the vibrating machine or structure.

### 2. Brief Description of Related Art

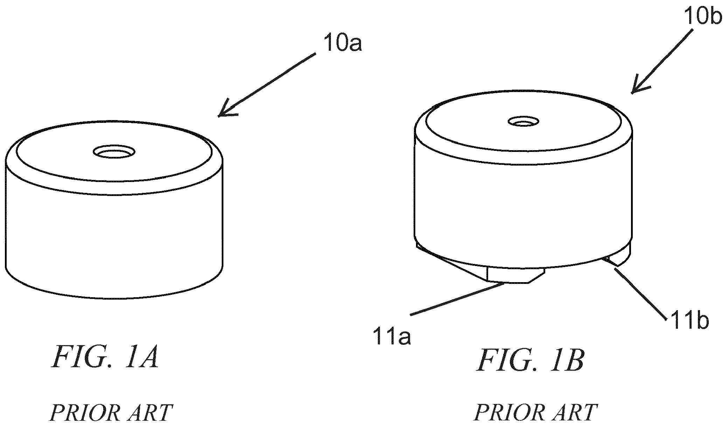

Magnetic mounting devices are used to mount a sensor device to a pump or another vibrating machine or structure to be monitored. In the market today, multiple types of magnetic mounting device are available for use with different surfaces, examples of which are shown in FIG. 1A-1B. A flat surface magnetic mount 10a is commonly used for mounting a sensor device to an object with a flat mounting surface. The flat surface magnetic mount 10a comprises a flat bottom surface. Multi-purpose magnetic mounts 10b are used primarily for mounting a sensor device to objects having curved surfaces. Multi-purpose magnetic mounts 10b may include rails 11 a, 11 b on the bottom surface.

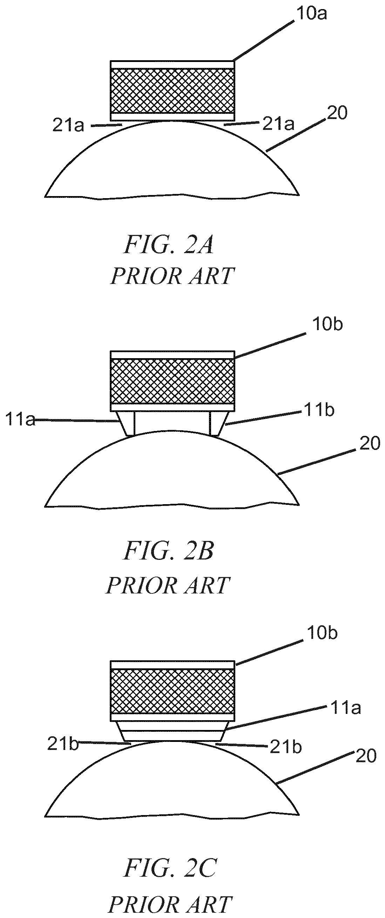

However, current magnetic mounts are very costly and require a specific alignment when mounted to curved or irregular surfaces. If the magnetic mount is not correctly mounted onto the surface of the device being monitored, the vibration measurement accuracy and frequency range would be compromised. For example, as shown in FIG. 2A, a flat surface mount 10a cannot be adequately mounted to a pump 20 having a curved surface, as one or more gaps 21 a are formed between the mount 10a and the curved surface of the pump 20. Although a multi-purpose mount 10b can be more easily mounted to a pump 20 having a curved surface, as shown in FIG. 2B, it is easy to incorrectly install a multi-purpose mount 10b. For example, if the rails 11 of the multi-purpose mount 10b are not properly aligned relative to the curved surface of the pump 20, as shown in FIG. 2C, one or more gaps 21 b may be formed causing vibrational noise.

The magnetic mounts of the prior art include many disadvantages, including reduced vibration frequency bandwidth, poor mechanical connection due to surface curvature and irregularities, induced vibrational noise due to improper mounting, and compromised vibration measurement accuracy.

It is an object of the present invention to address these shortcomings in the art.

### SUMMARY OF THE INVENTION

The present invention solves the above-described problems in the art by providing an exact constraint mount utilizing a three-point design in conjunction with an embedded rare earth magnet to provide the vibration sensing module with the most rigid connection on flat, curved and irregular surfaces of equipment while providing at the same time the flexibility of quick and easy attachment. The mobility of the magnetic mount of the present invention allows for quick and easy vibration analysis of equipment without the permanence of a vibration sensing module that is fastened or epoxied to the surface of the pump or other vibrating equipment.

All magnetic mounts reduce the accuracy a frequency bandwidth of the vibration sensing module, as compared to directly mounting the vibration sensing module directly to the equipment surface. However, the exact constraint magnetic mounting device of the present invention provides the best possible connection resulting in improved accuracy and increased frequency bandwidth when compared to other magnetic mounts.

The magnetic mounting device according to the present invention also eliminates the possibility of improperly attaching the mounting device to the equipment. The multi-purpose mount 10b shown in FIGS. 1B, 2B, and 2C includes parallel mounting rails 11a, 11b that must be oriented on the equipment surface in a specific manner to avoid gap formation. In contrast, the triangular arrangement of mounting projections of the present invention allows the mounting device to be properly attached to the equipment surface in any orientation. Therefore, the operator can attach the mounting device to the equipment faster and with greater ease.

Advantages of the exact constraint three-point magnetic mount of the present invention include that orientation of magnetic mount to equipment surface is not critical; all three points of the magnetic mount fully contact any surface type (flat, curved, or irregular); no gaps are formed between the mount and equipment surface that can cause vibrational noise, and the three point contact maximizes rigidity of mechanical connection.

Attachment of a vibration sensor device can utilize one or more fasteners (such as a ¼- 28UNF or M6 x 1) and/or a ball-in-cone constraint to prevent any rotational vibrational noise and thus increase the useable frequency bandwidth. Mechanical connection of the sensor to the magnetic mount needs to be stiff, having a high natural frequency utilizing exact constraint methods.

The height and weight of the magnetic mount is kept as short as possible in order to increase its stiffness and useable frequency bandwidth. The magnet can be encapsulated with epoxy or molded material to prevent any vibration (rattling) within the magnetic mount assembly. This prevents any vibrational noise and thus increases the useable frequency bandwidth.

In accordance with the present invention, a mounting device configured for mounting a sensor device to an article is provided. The mounting device comprises a body section comprising a mount surface configured to receive the sensor device, and a mounting base extending from the mount surface and comprising three mounting projections arranged on a base surface of the mounting base. The three mounting projections are configured to mount the mounting device to a surface of the article and constrain movement of the mounting device on the surface of the article. The mounting device further comprises a magnet arranged within the mounting base of the body section configured to attach the mounting device to the surface of the article.

In accordance with an embodiment of the present invention, the mounting base of the mounting device comprises a receptacle formed therein configured to house the magnet. The mounting device may also comprise a filler material arranged in the receptacle of the mounting base configured to encapsulate the magnet in the receptacle and reduce vibration within the mounting device. The filler material may comprise an epoxy or a molded material.

Further in accordance with any one or more of the above-described embodiments of the present invention, the mount surface of the mounting device may comprise at least one mounting hole configured to receive a mounting fastener configured to secure the sensor device to the mount surface. The at least one mounting hole and the mounting fastener can be threaded. The apparatus may further comprise at least one raised pad on the mount surface comprising an opening configured to receive a projection extending from a base of the sensor device and constrain movement of the projection of the sensor device. The mount surface of the mounting device may further comprise at least one sensor mounting point in the form of a depression or indentation in the mount surface. The at least one sensor mounting point may include a conical depression or indentation in the mount surface and the opening in the raised pad may be frustoconical and configured to align with the at least one sensor mounting point such that the at least one raised pad and at least one sensor mounting point form a cone configured to receive the projection extending from the base of the sensor device. The raised pad is further configured to level the sensor device on the mount surface.

Further in accordance with any one or more of the above-described embodiments of the present invention, the mount surface of the mounting device may comprise at least one mounting hole configured to receive a mounting fastener configured to secure the sensor device to the mount surface. The at least one mounting hole and the mounting fastener can be threaded. The mount surface may further comprise at least one sensor mounting point in the form of a depression or indentation in the mount surface configured to receive a projection extending from a base of the sensor device and constrain movement of the projection of the sensor device. The at least one sensor mounting point can include a conical depression or indentation in the mount surface.

In accordance with any one or more of the above-described embodiments of the present invention, each of the three mounting projections are arranged on the base surface of the mounting base so as to contact a flat surface of the article to constrain movement of the mounting device on the flat surface of the article. Further in accordance with any one or more of the above-described embodiments of the present invention, each of the three mounting projections are arranged on the base surface of the mounting base so as to contact a curved surface of the article to constrain movement of the mounting device on the curved surface of the article. Still further in accordance with any one or more of the above-described embodiments of the present invention, each of the three mounting projections are arranged on the base surface of the mounting base so as to contact an irregular surface of the article comprising ridges or bumps to constrain movement of the mounting device on the irregular surface of the article comprising ridges or bumps.

In accordance with any one or more of the above-described embodiments of the present invention, one or more of the three mounting projections comprise rounded or hemispherical surfaces for contacting the surface of the article. Further in accordance with any one or more of the above-described embodiments of the present invention, one or more of the three mounting projections comprise flat surfaces for contacting the surface of the article.

In accordance with any one or more of the above-described embodiments of the present invention, the sensor device is a vibration sensing module, wherein the article is a vibrating machine or structure and wherein the three mounting projections are configured to reduce vibrational noise caused by one or more gaps formed between the surface of the article and the mounting device. The article may be a pump.

In accordance with any one or more of the above-described embodiments of the present invention, the three mounting projections are arranged on the base section in a triangular arrangement with substantially equal distances between each of the three mounting projections so as to form a substantially equilateral triangle between the three mounting projections. Alternatively, the three mounting projections can be arranged on the base section in a triangular arrangement that is not equilateral.

### BRIEF DESCRIPTION OF THE DRAWING

The drawing includes the following Figures, which are not necessarily drawing to scale:
FIG. 1A shows a flat surface magnetic mount according to the prior art
FIG. 1B shows a multi-purpose magnetic mount according to the prior art.
FIG. 2A shows a flat surface magnetic mount according to the prior art mounted to an object having curved surface.
FIG. 2B shows a multi-purpose magnetic mount according to the prior art mounted in its proper position to an object having curved surface.
FIG. 2C shows a multi-purpose magnetic mount mounted according to the prior art mounted in an improper position to an object having curved surface.
FIG. 3A is a top perspective view of an exact constraint magnetic mounting device according to some embodiments of the present invention.
FIG. 3B is a bottom perspective view of an exact constraint magnetic mounting device according to some embodiments of the present invention.
FIG. 3C is an exploded view of an exact constraint magnetic mounting device according to some embodiments of the present invention.
FIG. 4A shows an exact constraint magnetic mounting device according to an embodiment of the present invention mounted to an object having a curved surface.
FIG. 4B shows an exact constraint magnetic mounting device according to an embodiment of the present invention mounted to an object having an irregular surface.
FIG. 4C shows an exact constraint magnetic mounting device according to an embodiment of the present invention mounted to an object having a flat surface.
FIG. 5A is a top perspective view of a sensing module according to an embodiment of the present invention.
FIG. 5B is a bottom perspective view of a sensing module according to an embodiment of the present invention.
FIG. 6 is a top perspective view of an exact constraint magnetic mounting device according to a further embodiment of the present invention.
FIG. 7A shows a sensing module mounted onto an exact constraint magnetic mounting device according to a further embodiment of the present invention.
FIG. 7B shows a vibration sensor mounting point on an exact constraint magnetic mounting device according to a further embodiment of the present invention.
FIG. 7C shows an example of a ball-in-cone constraint arrangement according to an embodiment of the present invention.
FIG. 7D shows a sensing module mounted onto an exact constraint magnetic mounting device according to a further embodiment of the present invention.

### DETAILED DESCRIPTION OF THE INVENTION

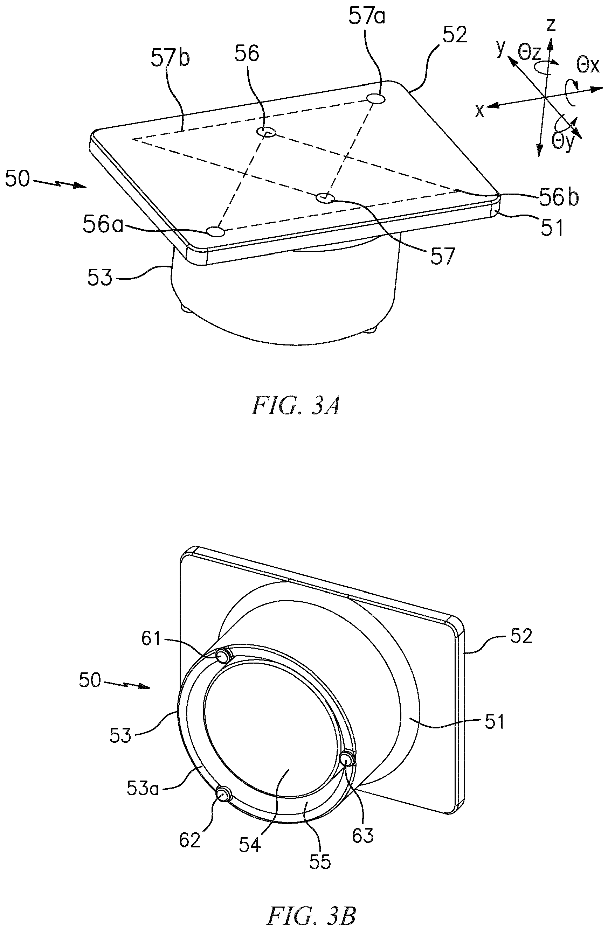

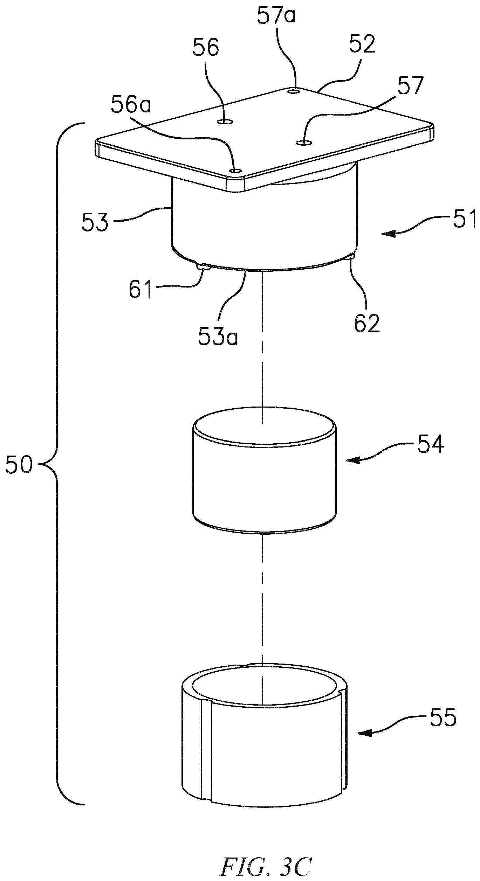

The present invention will now be described with reference made to FIGS. 3A-7D.

In accordance with an embodiment of the present invention, shown for example in FIGS. 3A-3C, a magnetic mounting device 50 is provided with an exact constraint arrangement for securely mounting the magnetic mounting device 50 to a multitude of surfaces.

The magnetic mounting device 50 may include a body section 51 comprising an upper, mounting surface 52 and a mounting base 53. The mounting surface 52 may be integrally formed with the mounting base 53, such as by molding, casting or machining the body section 51 of the magnetic mounting device 50 as a single component, or may be attached to the mounting base 53.

The mounting surface 52 is configured to receive the base of a sensor module or other device that is to be mounted onto the magnetic mounting device 50. The mounting surface 52 can be a substantially flat surface as shown in the Figures, and can dimensioned for mounting the base of a sensor module. In the embodiments of the magnetic mounting device 50 shown in the Figures, the mounting surface 52 is substantially rectangular in shape, however in alternative embodiments of the invention, the mounting surface 52 can take other polygonal forms, such as circular, square, etc., depending on the shape and dimensions of the sensor device that is to be used in connection with the magnetic mounting device 50. The mounting surface 52 may comprise one or more mounting holes 56, 57 formed therethrough. The mounting holes 56, 57 may be threaded and configured to receive a fastener, such as a threaded screw, that is affixed to or configured through a sensor module, in order to fasten the sensor module or other device to the magnetic mounting device 50. In other embodiments of the present invention, the mounting surface 52 may include a single mounting hole 56, or may include more than two mounting holes 56, 57.

In certain embodiments of the present invention, the mounting surface 52 of the mounting device 50 may include either or both of a metric anti-rotation mount 56a and an English anti-rotation mount 57a. Each of the metric anti-rotation mount 56a and English anti-rotation mount 57a enable a sensor module to be held down by a metric fastener or screw, or an English fastener or screw, to prevent rotation of the sensor module. Securing the sensor module to the mounting surface by way of a fastener inserted into one of the two mounting holes 56, 57 constrains the in the sensor module in three degrees-of-freedom (x, y, z). The anti-rotation mounts 56a, 57a, when combined with one of the fastener constraints (metric or English) further constrains the sensor module in the rotational degrees-of-freedom (Θx, Θy, Θz). This enables the sensor module to be mounted in an exact constraint manner. A single mounting device 50 may be provided with a metric anti-rotation mount 56a and an English anti-rotation mount 57a in opposing corners or edges of the mounting surface. The sensor module can be mounted in a first orientation 56b if the metric anti-rotation mount 56a is used and a second orientation 57b if the English anti-rotation mount 57a is used.

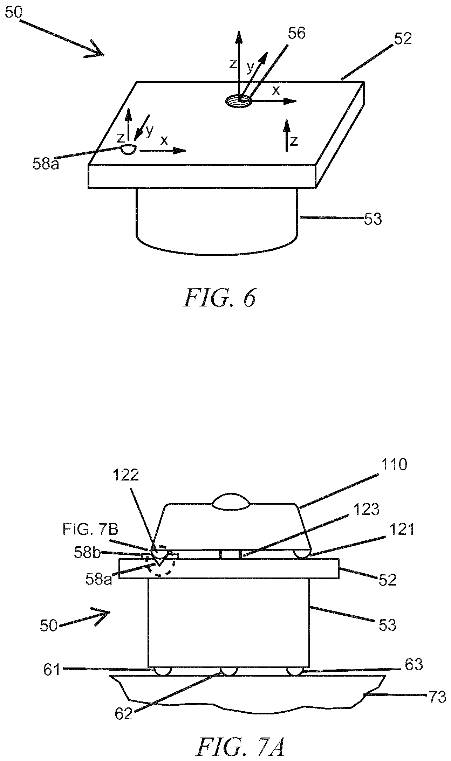

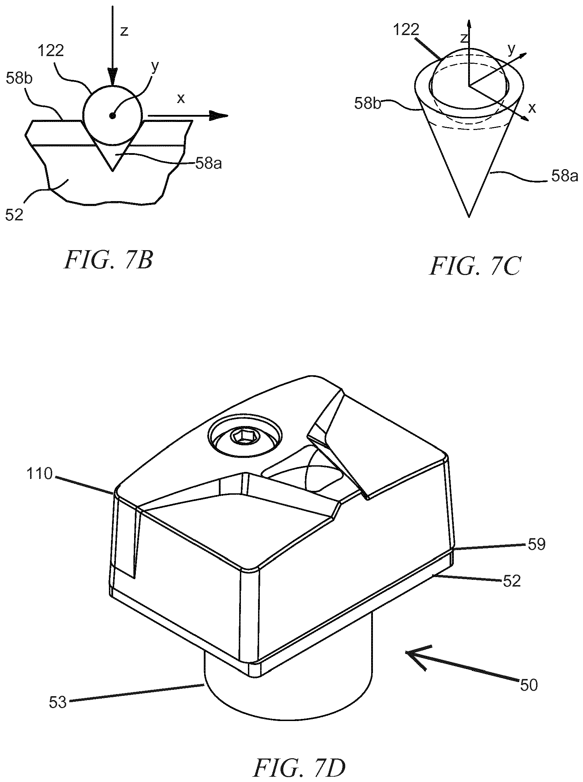

In further embodiments of the present invention, such as shown in FIG. 6, the mounting surface 52 may further comprise one or more sensor mounting points 58a configured to receive a mounting projection of a sensor module to constrain the movement of the mounting projection and sensor module along the x-, y- and z-axes. In additional embodiments, as shown in FIGS. 7A-7C, a raised pad 58b may be provided in addition to or alternatively to the sensor mounting point 58a. The raised pad 58b may be cast in with the mounting surface 52 and configured to keep the sensor module level by compensating for the distance that a mounting projection from a sensor module dips into the sensor mounting point 58a. The raised pad 58b comprises an opening, which may be frustoconical, configured to receive a mounting projection of a sensor module. The frustoconical opening of the raised pad 58b can be configured to align with the sensor mounting point 58a so that the raised pad 58b and sensor mounting point 58a form a contiguous conical indentation to receive the mounting projection of a sensor module. Embodiments of the mounting device 50 can be provided including one or more raised pads 58b without a sensor mounting point 58a in the mounting surface. The raised pad 58b is also configured to constrain the movement of the mounting projection and sensor module along the x-, y- and z-axes.

The mounting base 53 extends from the mounting surface 52 so as to serve as the base of the magnetic mounting device 50. The mounting base 53 may comprise a receptacle 53a formed therein, which may be formed so as to be substantially hollow, or have a hollow section thereof, configured to receive a magnet 54, such as a rare earth magnet. The magnet 54 enables the magnetic mounting device 50 to be secured to a metallic surface of a device, such as a pump. A layer of a filler material 55 may be provided to fill any space in the receptacle 53a between the magnet 54 and the inner walls of the receptacle 53a. The filler material 55 may include an epoxy material or another molded or plastic material. The filler material 55 encapsulates the magnet 54 to prevent any vibration or rattling within the magnetic mounting device 50. The filler material 55 also secures the magnet 54 in place. This prevents vibrational noise and increases the useable frequency bandwidth of the magnetic mounting device 50. In the embodiments shown in the Figures, the mounting base 53 of the magnetic mounting device 50 is cylindrical in shape with a circular cross-section. In alternative embodiments of the invention, the mounting base 53 and receptacle 53a may have different shapes, such as having square, rectangular, triangular, or other cross-sectional shapes. The magnet 54 of the mounting base 53 may also come in different shapes configured for use in a mounting base 53 having an alternate shape.

The magnetic mounting device 50 comprises an exact constraint mounting arrangement for securely attaching the magnetic mounting device 50 to a surface. The exact constraint mounting arrangement is created by three mounting points 61, 62, 63 arranged on the bottom surface of the magnetic mounting device 50 (i.e., the bottom of the body section 51 or mounting base 53). The mounting points 61, 62, 63 include projections from the magnetic mounting device 50, as shown for example in FIG. 3B. The mounting projections 61, 62, 63 may be molded into the base of the magnetic mounting device 50 and made of the same material as the body section 51 of the magnetic mounting device 50. In alternative embodiments, one or more of the mounting projections 61, 62, 63 could also be separate parts, made of the same or different materials, which are secured in place to the mounting base 53 of the magnetic mounting device 50 via press-fit, threaded, industrial adhesive, or other attachment means. The mounting projections 61, 62, 63 may be have a rounded or hemispherical shape or have a flat surface for contacting the surface of the device to which the magnetic mounting device 50 is mounted. The mounting projections 61, 62, 63 may be substantially similar in size. The three mounting projections 61, 62, 63 are arranged in a triangular arrangement. In accordance with one embodiment of the invention shown for example in FIG. 3B, the mounting projections 61, 62, 63 are arranged so as to form a substantially equilateral triangle, in which each of the mounting projections 61, 62, 63 are separated by an angle of approximately 120°. However, in alternative embodiments of the invention, the arrangement of the mounting projections 61, 62, 63 can be triangular without forming an equilateral triangle, including for example having mounting projections separated by angles greater and less than 120°. The height of the mounting projections 61, 62, 63 can determine how severe of a curved surface the magnetic mounting device 50 can mount to or how rough/irregular of a surface magnetic mounting device 50 can mount to. In addition, the greater the height of the mounting projections 61, 62, 63 the farther away the magnet is which will reduce the magnetic holding force. The height of the mounting projections 61, 62, 63 can be optimized in order to offer the best holding force for a given curved surface allowance (i.e. minimal surface radius).

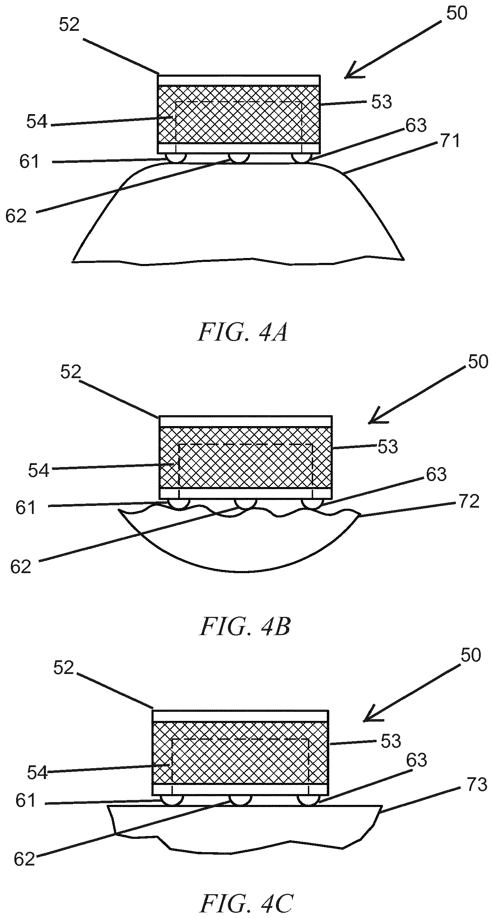

With the incorporation of the three mounting projections 61, 62, 63 forming an exact constraint three-point mount, the magnetic mounting device 50 can be mounted to equipment surfaces of different types. As illustrated in FIGS. 4A-4C, the magnetic mounting device 50 can be mounted to a curved surface 71 (FIG. 4A), an irregular surface 72 that may include ridges or bumps and lacks smoothness (FIG. 4B) and a flat surface 73 (FIG. 4C). The magnetic mounting device 50 is configured such that when mounted to each of the three types of surfaces 71, 72, 73, each of the three mounting projections 61, 62, 63 can make contact with the surface 71, 72, 73. This prevents the formation of unnecessary gaps between the magnetic mounting device 50 and the equipment surfaces 71, 72, 73, which can cause vibrational noise. In addition, as the three mounting projections 61, 62, 63 are arranged around the diameter or perimeter of the mounting base 53, the specific orientation of the magnetic mounting device 50 is not critical. Unlike the mounting device 10b of FIGS. 2B and 2C, if the magnetic mounting device 50 is arranged on a surface 71, 72, 73 in a first orientation or a second orientation in which the device is rotated from the first orientation between 0° and 180°, the magnetic mounting device 50 has an equally rigid mechanical connection without forming any gaps between the magnetic mounting device 50 and the equipment surface 71, 72, 73.

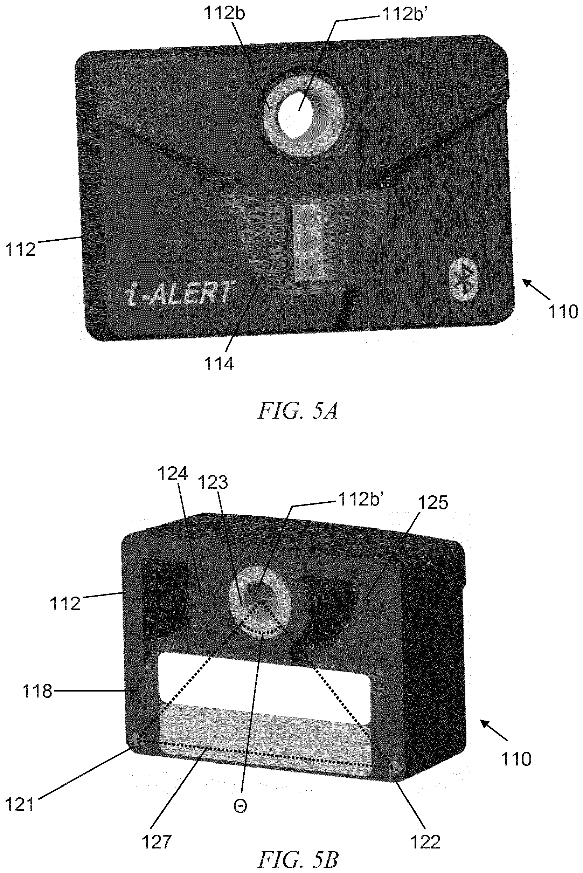

The magnetic mounting device 50 can be used in order to mount any number of sensor apparatuses for measuring one or more metrics of a device. By way of example, FIGS. 5A-5B show an apparatus 110 in the form of a sensing module for configuring on a vibrating machine or structure, such as pump or pump assembly. The sensing module 110 may include an outer shell 112 having a top surface and a base 118, and encapsulated electronics. The encapsulated electronics may include, for example, a multicolored light array in the form of an LED array that is arranged inside the outer shell 112, and configured to respond to signaling containing information about a condition being sensed and monitored by the sensing module 110 and at least one beam of light containing information about the condition. By way of example, the signaling may be received from one or more of the other encapsulated electronics, which may include an accelerometer, a temperature sensing device or other suitable sensing device that is either now known or later developed in the future. The sensing module 110 may also include a domed lens 114 configured on the outer shell 112, that is configured to reflect, re-reflect and project the at least one beam of light outwardly with a visibility of 360° about the sensing module 110 for viewing from afar, e.g., by an observer visually monitoring the sensing module 110. The domed lens 114 may include a middle lens portion configured with a top curved surface and two side lens portions configured with side surfaces. The middle lens portion and two side lens portions are transparent to project the at least one beam of light from the domed lens 114. The top curved surface may be configured with a suitable curvature for projecting, reflecting and re-reflecting the at least one beam of light. As a result, an observer in an industrial plant monitoring the vibrating machine or structure may able to see the at least one beam of light being projected from the domed lens 114 from afar, e.g., with a glow of projected light. The outer shell 112 may also include a circular rim 112b that is configured to form a mounting opening 112b' for receiving a mounting screw or fastener to fasten the sensing module 110 to the mounting surface 52 of a mounting device 50 or the surface 71, 72, 73 of a vibrating machine or structure, such as the pump or pump assembly.

The base 118 of the sensing module 110 may include a first mounting projection 121 and a second mounting projection 122, which project from the base 118. The first mounting projection 121 and the second mounting projection 122 may be hemispherical in shape and may be substantially similar in size. In a preferred embodiment, the first and second mounting projections 121, 122 comprise a rounded shape, in order to create a true point contact to the mating surface, although other shapes may be utilized that create a contact point for the mating surface. In the embodiment shown in the Figures, in which the base 118 is substantially rectangular in shape, the first mounting projection 121 and second mounting projection 122 are positioned in separate corners or extremities of the base 118. In a preferred embodiment, the first mounting projection 121 and second mounting projection 122 are separated by an angle Θ of approximately 60°. The first mounting projection 121 and second mounting projection 122 can be molded into the sensing module 110 as part of the base 118. This may be done for ease of manufacturability and cost. In alternative embodiments, the first mounting projection 121 and/or second mounting projection 122 could also be separate parts that are secured in place to the base 118 via press-fit, threaded, industrial adhesive, or other attachment means.

The base 118 may also include a third mounting projection 123 in the form of a rim 123 that surrounds the opening 112b' through the sensing module 110. The opening 112b' is configured to receive a fastener, such as a bolt or a screw, which may be received in a corresponding opening on a mounting device or the equipment surface. The rim 123 may come into contact with a mounting surface, such as a mounting device or a pump surface, separating the base 118 of the sensing module 110 from the mounting surface. A force is applied to pre-load the sensing module 110 against its mounting surface. The screw fastener may be provided for this purpose. The pre-load or mounting force lies within the triangle (represented by dashed lines 127 shown in FIG. 5B) formed by the three points of contact 121, 122, 123, preferably at the centroid of the triangle 127.

As shown for example in FIG. 5B, one or more cavities 124, 125 may also be formed in the base 118 of the sensing module 110. The cavities 124, 125 reduce the thickness of the base 118 of the sensing module 110, which may be injection molded. Additionally, reducing the weight of the module without reducing its structural strength results in a higher natural frequency of the sensing module 110, and this can be achieved by incorporating cavities 124, 125 in the base 118.

The magnetic mounting device 50 may be configured with a mounting surface 52 designed for use in connection with a sensing module or device including mounting projections on its base, including for example the sensing module 110. Such embodiments are shown in FIGS. 6 and 7A-7D, for example, and include one or both of a sensor mounting point 58a, which can be an indentation or depression formed in the mounting surface 52, and raised pad 58b on the mounting surface 52. The magnetic mounting device 50 may include a mounting hole 56, such as a threaded mounting hole 56, one or more sensor mounting points 58a and/or one or more raised pads 58b. The mounting hole 56 is configured to align with the mounting opening 112b' for receiving a mounting screw or fastener to fasten the sensing module 110 to the mounting surface 52 of the magnetic mounting device 50. The sensor mounting point 58a and raised pad 58b are configured to receive a mounting projection, such as a mounting projection 122, of a sensor module 110. The mounting projection 122 is received in the sensor mounting point 58a and raised mounting pad 58b, which constrains movement of the mounting projection 122 and sensor module 110 in three directions, along the x-, y- and z-axes. In certain embodiments of the magnetic mounting device 50, the sensor mounting point 58a can be conical in shape to provide a "ball-in-cone" arrangement. An exemplary "ball-in-cone" constraint arrangement is shown in FIG. 7C. The raised pad 58b comprises a frustoconical, cylindrical or rounded opening configured to align with a sensor mounting point 58a in the mounting surface 52 to form a continuous cone or other shaped-opening to receive a mounting projection 122 of the sensor module 110. The depth of the opening in the raised pad 58b is such that the mounting projection 122 arranged in the raised pad 58b is level with an adjacent mounting projection 121 that is arranged on the mounting surface 52, so that the two mounting projections 121, 122 and the sensor module 110 are level, as shown for example in FIG. 7B. The sensor mounting point 58a can be hemispherical or other shaped indentations or depressions in the mounting surface 52. In other embodiments of the magnetic mounting device 50, a plurality of sensor mounting points 58a and/or raised pads 58b can be provided on the mounting surface 52 for receiving a plurality of mounting projections 121, 122 of a sensor module or apparatus. Embodiments of the magnetic mounting device 50 as shown in FIGS. 6-7C may further include one or more of the metric anti-rotation mount 56a and/or the English anti-rotation mount 57b, and may also include a second mounting hole 57.

The magnetic mounting device 50 is configured to receive and mount sensor module 110 in such a manner that it minimizes a gap 59 between the base of sensor module 110 and the mounting surface 52 of the magnetic mounting device 50, and minimize the height of the mounting of the sensor module off of the surface 71, 72, 73 of the apparatus to be measured.

In other embodiments, the sensing module may not include a three-point mounting configuration and other types and configurations of sensing modules and devices can be used with the magnetic mounting device 50 of the present invention. For example, the magnetic mounting device of the present invention can be used with a sensing module such as the one shown and described in applicant's U.S. Patent No. 9,811,984 issued on November 7, 2017 and filed on April 13, 2015 as U.S. Application No. 14/685,134, which is incorporated by reference in its entirety.

### The Scope of the Invention

It should be understood that, unless stated otherwise herein, any of the features, characteristics, alternatives or modifications described regarding a particular embodiment herein may also be applied, used, or incorporated with any other embodiment described herein. Also, the drawings herein are not drawn to scale.

Although the invention has been described and illustrated with respect to exemplary embodiments thereof, the foregoing and various other additions and omissions may be made therein and thereto without departing from the spirit and scope of the present invention.

## Claims

1. A mounting device (50) configured for mounting a sensor device to an article, comprising:
a body section (51) comprising:
a mounting surface (52) configured to receive the sensor device (110), and
a mounting base (53) extending from the mount surface and comprising three mounting projections (61, 62, 63) arranged on a base surface of the mounting base (53), the three mounting projections (61, 62, 63) configured to mount the mounting device (50) to a surface of the article and constrain movement of the mounting device (50) on the surface of the article; and
a magnet (54) arranged within the mounting base (53) of the body section (51) configured to attach the mounting device (53) to the surface of the article.

2. The mounting device according to claim 1, wherein the mounting base (53) comprises a receptacle (53a) formed therein configured to house the magnet (54).

3. The mounting device according to claim 1 or 2, wherein the mounting base (53) comprises a filler material (55) arranged in the receptacle (53a) of the mounting base (53) configured to encapsulate the magnet (54) in the receptacle (53a) and reduce vibration within the mounting device (50).

4. The mounting device according to claim 3, wherein the filler material (55) comprises an epoxy or a molded material.

5. The mounting device according to one of the preceding claims, wherein the mounting surface (52) comprises at least one mounting hole (56) configured to receive a mounting fastener configured to secure the sensor device (110) to the mounting surface (52).

6. The mounting device according to claim 5, wherein the at least one mounting hole (56) and the mounting fastener are threaded.

7. The mounting device according to claim 5, further comprising at least one raised pad (58b) on the mounting surface (52) comprising an opening configured to receive a projection (121) extending from a base (118) of the sensor device (110) and constrain movement of the projection (121) of the sensor device (110).

8. The mounting device according to claim 7, wherein the mounting surface (52) comprises at least one sensor mounting point (58a) in the form of a depression or indentation in the mounting surface (52).

9. The mounting device according to claim 8, wherein the at least one sensor mounting point (58a) is a conical depression or indentation in the mounting surface (52) and the opening in the raised pad (58b) is frustoconical and configured to align with the at least one sensor mounting point (58a) such that the at least one raised pad (58b) and at least one sensor mounting point (58a) form a cone configured to receive the projection (121) extending from the base of the sensor device (110), and
wherein the raised pad (58b) is configured to level the sensor device (110) on the mounting surface (52).

10. The mounting device according to one of claims 5 to 9, wherein the mounting surface (52) further comprises at least one sensor mounting point (58a) in the form of a depression or indentation in the mounting surface (52) configured to receive a projection (121) extending from a base (118) of the sensor device (110) and constrain movement of the projection (121) of the sensor device (110).

11. The mounting device according to claim 10, wherein the at least one sensor mounting point (58a) is a conical depression or indentation in the mounting surface (52).

12. The mounting device according to one of the preceding claims, wherein each of the three mounting projections (61, 62, 63) are arranged on the base surface of the mounting base (53) so as to contact a flat or a curved or irregular surface of the article to constrain movement of the mounting device (50) on the flat or curved or irregular surface of the article.

13. The mounting device according to one of the preceding claims, wherein one or more of the three mounting projections (61, 62, 63) comprise
a rounded or hemispherical surface for contacting the surface of the article; or
a flat surface for contacting the surface of the article.

14. The mounting device according to one of the preceding claims, wherein the sensor device (110) is a vibration sensing module, wherein the article is a vibrating machine or structure and wherein the three mounting projections (61, 62, 63) are configured to reduce vibrational noise caused by one or more gaps (59) formed between the surface of the article and the mounting device (50), wherein the article is preferably but not mandatorily a pump.

15. The mounting device according to one of the preceding claims, wherein the three mounting projections (61, 62, 63) are arranged on the base section in a triangular arrangement
with substantially equal distances between each of the three mounting projections (61, 62, 63) so as to form a substantially equilateral triangle between the three mounting projections (61, 62, 63); or
that is not equilateral.
